# EUROPEAN PATENT APPLICATION

(11) **EP 1 492 307 A1**
(43) Date of publication of application: **29.12.2004**
(21) Application number: 03291578.7
(22) Date of filing: 27.06.2003
(51) Int. Cl.: H04L 29/08

(54) **Method and apparatus for automatically determining a presence status**

(71) Applicant: Hewlett-Packard Development Company, L.P., Houston, TX 77070 (US)
(72) Inventor: Wieczorek, Philippe, 38330 St Ismier (FR); Kyriakides, Lionel, 38190 Brignoud (FR)
(74) Representative: Lloyd, Richard Graham

(57) **Abstract**

According to one embodiment of the present invention, there is provided apparatus, for use with a computing device, for selecting a presence status from a number of available presence statuses comprising:
a data store (206) for storing at least one predeterminable rule;
an activity monitor (202) for monitoring an activity through the device; and
logic for determining the presence status based in part on the at least one rule and in part on the monitored activity.

## Description

The present invention relates to the field of presence and, more particularly, to a method and apparatus for automatically determining a presence status. An embodiment of the invention also provides a presence broker for managing presence information from multiple sources.

When a telephone call is made to a user using a traditional telephone network, such as the plain old telephone system (POTS), the call is typically placed without any precise knowledge of whether the user is available to accept the call. For example, if a call is placed to the home of a user and the user is not at home the user will, evidently, be unable to accept the call. The caller then has the option of either calling back later, or attempting to call another telephone where the user may be reachable, such as a mobile telephone or an office telephone. However, this kind of information is generally not available to the caller, and relies somewhat on the caller using common sense and some prior knowledge of the likely whereabouts of the user.

To overcome some of the above-mentioned problems it is known to use services such as call forwarding to help ensure that phone calls reach their intended recipient at their present location. For example, it is common for office workers to forward calls made to their office phone to their mobile telephone when away from their desk. However, this only helps solve the problem of ensuring that a call is placed to the appropriate location.

Depending on the activity currently undertaken by a user, the user may be either unable and/or unwilling to accept a call. For example, if the user is driving a car when a call is placed to his mobile telephone he may be unwilling and unable to accept the call for safety reasons. Similarly, if a call is placed to the user in the middle of the night, the user may be able, but unwilling, to accept the call, as may be the case if the user is in an important meeting. Again, in traditional telephone systems this type of information is typically not available to the caller.

Some more recent communications system now use the concept of 'presence' to allow a user to indicate to other users their ability or willingness to partake in communications.

For example, Internet-based instant messaging systems, such as Microsoft's MSN Messenger, iCQ and Jabber, use presence information to indicate to other users the ability of a user to receive or respond to instant messages. Instant messages may be sent from a user of one computer to another user having a compatible instant messaging application. Typically a user may select from a number of presence statuses such as 'online', 'busy', 'away from desk', and so on, which may be used to indicate, to other users, their willingness or ability to accept, for example, instant messages. For example, if a user sets his presence status to 'away from desk' this indicates to other users that any instant messages sent may not be seen or responded to immediately. The number and type of presence statuses may differ between presence based systems.

Session initiation protocol (SIP) telephony may also use presence information, for example when routing a call. For example, a SIP call placed to a user's SIP work telephone when the presence status of that user is 'away from desk' may be automatically routed to the users mobile telephone by the SIP network based on presence information. Similarly, a presence status of 'at home' may cause all calls to any of the user's communication devices to be routed to the user's home telephone.

Such systems generally use a presence server or database to which each user publishes, or makes available to other users, their current presence status. Applications such as instant messaging applications regularly consult the presence server to determine which users are connected to the Internet, and whether they are able to receive instant messages. Typically each user must set his presence status manually.

Some instant messaging systems provide a small degree of automation in determining and publishing presence status information. For example, should a user not have made any input to a computer running an instant messaging application from any of the computer input devices, such as the keyboard or the mouse, for a given length of time, the system may automatically publish a presence status of, for example, 'away from desk'. As described above, depending on the applications using the presence information this may, for example in the case of an instant messaging application, prevent the reception of instant messages, or in the case of SIP telephony, alter the routing of a call.

It is known for instant messaging systems to be integrated with an electronic calendar to provide a degree of automation based on information in the calendar. For example, if a user is scheduled as being in a meeting at a particular time, the presence status may be automatically published to indicate that the user is 'away from desk'.

However current presence systems either rely on a user manually updating their presence status information, or provide only a basic level of automation. Accordingly, there are many situations where the actual status of the user may differ from the published presence status. This disparity may at best be inconvenient, but could also cause messages not to be sent when a user is able to receive them, or could cause calls to be incorrectly routed.

One aim of the present invention is to overcome at least some of the above-mentioned problems.

According to a first aspect of the present invention, there is provided apparatus, for use with a computing device, for selecting a presence status from a number of available presence statuses. The apparatus comprises a data store for storing at least one predeterminable rule, an activity monitor for monitoring an activity through the device, and logic for determining the presence status based in part on the at least one rule and in part on the monitored activity.

Preferably the activity monitored by the activity monitor is defined by the at least one rule.

Suitably the activity monitor may monitor activity of the device. The activity monitor may also monitor activity external to the device.

Preferably a presence publisher is included for publishing the determined presence status to a presence server.

The logic may be adapted for determining a plurality of presence statuses.

The presence publisher may be adapted to publish each determined presence status to one of a plurality of presence servers.

The device may be any one of a personal computer (PC), personal digital assistant (PDA), or a telephony-based communications device.

The determined presence information may be published, for example, to an instant messaging presence server or a session initiation protocol (SIP) presence server.

According to a second aspect of the present invention, there is provided a method, for use with a computing device, for selecting a presence status, from a number of available presence statuses. The method comprises monitoring an activity through the device, and determining a presence status based in part on the monitored activity and in part on at least one predeterminable rule.

The monitoring may comprise monitoring an activity as defined by the at least one rule.

The step of monitoring may comprise monitoring an activity on the device, or an activity external to the device.

The method may further comprise publishing the determined presence status to a presence server.

The step of determining may comprise determining a plurality of presence statuses.

The step of publishing further may comprise publishing each determined presence status to one of a plurality of presence servers.

The method may be for use with any one of a personal computer (PC), personal digital assistant (PDA), or a telephony-based communications device.

The step of publishing may comprise publishing the presence status to, for example, an instant messaging presence server, or to a session initiation protocol (SIP) presence server.

According to a further aspect of the present invention, there is provided a presence broking system for managing presence information received from two or more devices associated with a single user. The system comprises a storage device for storing at least one predeterminable rule, and means for publishing a presence status to a presence server based on the received presence information and the at least one predeterminable rules.

The invention will now be described, by way of example only, with reference to the accompanying drawings, in which:
Figure 1 is a block diagram showing an overview of a typical computer running a number of different applications and a monitoring application in accordance with an embodiment of the present invention;
Figure 2 is a block diagram showing an overview of a monitoring application in accordance with an embodiment of the present invention;
Figure 3 is a block diagram showing an overview of a system incorporating an embodiment of the present invention; and
Figure 4 is a block diagram of a presence brokering service according to an embodiment of the present invention.

The system generally comprises an activity monitor which monitors the activity of a computing device, such as a personal computer (PC), and determines a presence status using a set of predeterminable rules. The determined presence status may be published to an appropriate presence server to indicate the presence status of a user to other users. The use made of the published presence information may vary widely depending on specific requirements. For example, if a user uses an instant messaging application the presence information may affect the ability of other users to send instant messages to the user. The presence information may also indicate to other users the ability or willingness of a user to respond to an instant message. If the user uses a session initiation protocol (SIP) telephone the determined presence status may alter the way in which calls to the user are routed. For example, if the presence status indicates that the user is away from his desk, calls may be routed automatically to an office mobile telephone.

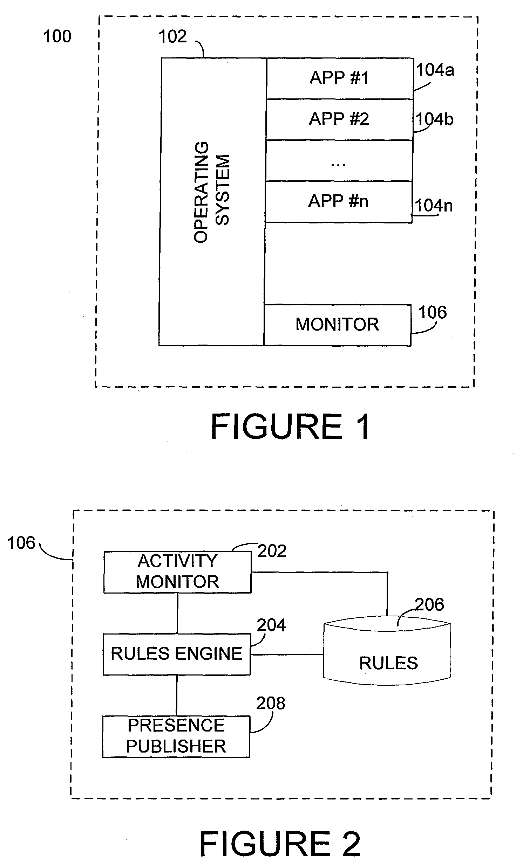

Figure 1 is a block diagram showing an overview of a computing device, such as a personal computer (PC), 100 running an operating system 102 and a number of applications 104a to 104n. As is common on most modern multi-tasking operating systems, many software applications may run simultaneously. One of these applications is typically known as the foreground application and it is this application which typically receives user inputs made via the keyboard, mouse or other equivalent user input means. The other applications are typically referred to as background applications and may be running although not receiving user inputs. For example, a user may be writing an email using an email application whilst downloading a file from the Internet in the background using an Internet browser.

Depending on the actual application currently being used, i.e. the current foreground application, the user may wish to his presence status to change. For example, if the user is using a word processing application the user may wish his presence status to be 'busy'. If the presence status is used by an instant messaging application, this may be used to prevent the user from receiving instant messages whilst typing a document. Similarly, if a user is engaged in an Internet conference using an Internet conferencing application, he may wish that all calls to his office telephone are forwarded to voicemail. This may be achieved, for example, if the office telephone is a SIP phone and by publishing an appropriate presence status to a SIP presence server.

In a first embodiment of the present invention, a monitor application or computer program 106 is provided which monitors the activity of the computer and determines a presence status based on the monitored activity in association with a predeterminable set of user rules.

An embodiment of the monitor application 106 is shown in greater detail in Figure 2. The monitoring application 106 comprises an activity monitor 202 which monitors the activity of the computer 100. The type of activity monitored by the activity monitor 202 may include, for example, monitoring of user inputs from user input devices such as a keyboard or mouse, monitoring of the current foreground application, and monitoring of one or more of the active background applications. The monitoring may additionally include recording the length of time certain applications are active, either as foreground or background applications, recording the time elapsed since the last user input, the frequency of user inputs, whether a laptop computer is 'docked' or mobile, and so on. It will be understood that there are multitude of activities which may be monitored depending on particular requirements. It is also possible for activities external to the computer to be monitored. Preferably the activities monitored by the activity monitor 202 are determined by the rules 206.

As will be understood by those skilled in the art, the monitoring may achieved, for example, by making appropriate system calls to the operating system 102 through an appropriate application programming interface (API). Other forms of monitoring may also be used in appropriate circumstances, such as the monitoring of electrical signals.

The activity monitor 202 monitors the activities specified by the rules 206, and supplies information to a rules engine, or logic block, 204 which uses the rules 206 to determine the presence status of the user. For example, depending on the current foreground application running on the computer the user may wish to change his presence status. The user may additionally wish to combine additional rules, based for example on the time and day.

Table 1 below shows an example set of rules for use with an instant messaging application in which the presence status is changed according to the current foreground application in use on the computer 100.

**TABLE 1**

| ACTIVITY | CONDITION | PRESENCE STATUS |
|---|---|---|
| Foreground Application = Word processor | Typing | Busy |
| Foreground Application = Spreadsheet | Typing | Busy |
| Foreground Application = Internet Browser | If between 9h00 and 12h00 or 13h00 to 17h00 Otherwise | Busy Available |
| Foreground Application = Internet Conferencing | | Busy |
| Foreground Application = Screen saver | After 18h00 | Out of office |
| Foreground Application = Screen saver | Between 9h00 and 18h00 | Away from desk |

In the above example, it may be assumed that if an Internet browser is used in 'normal' office hours that the user is browsing the Internet for work purposes and therefore may not want to be disturbed. However, if the user is browsing the Internet during his lunchtime he may be willing to be disturbed by messages and/or telephone calls.

More complex rules may also be used, as shown, for example, in Table 2 below.

**TABLE 2**

| ACTIVITY | CONDITION | PRESENCE STATUS |
|---|---|---|
| Recently Used application = Printer spooler | If a document printed from a word processor application and the document was recently downloaded from the Internet | Show as 'Busy' for a length of time related to the length of the document printed |

In the above case, it may be assumed that once the user has printed a document, he is likely to read it. Accordingly, the length of time required to read the document is likely to be related to the length of the document. The length of time may also depend on whether the user has been writing the document on a word processor application,

in which case the user may just quickly read through the document for checking purposes, or whether the user has recently downloaded the document from the Internet, for example, in which case the user may need additional time to read the document.

In any case, the rules are preferably fully customizable such that the presence information determined by the monitoring application 106 corresponds, to a reasonable degree of accuracy, to the actual presence status of the user.

The rules may be stored in a rules database 206 local to the computer 100, or may be stored on a non-local storage device, such as a network server or the like. One advantage of storing the rules on a network is that a user may use a single globally available set of rules on each device to which the user has access.

The rules are interpreted by a rules engine 204 which uses the rules 206 and information from the activity monitor 202 to determine a presence status. The determined presence status may be published to a suitable presence server as appropriate.

In a further embodiment the presence status information may be published to one or more different presence servers. It is also possible that different presence status information may be published to different presence servers in response to the same rule. For example, one presence status may be published to an instant messaging presence server, whilst a different presence status may be published to a SIP presence server. An example is shown in Table 3 below:

**TABLE 3**

| ACTIVITY | CONDITION | ACTION |
|---|---|---|
| Internet Browser | If between 9h00 and 12h00 or between 13h00 and 17h30 | Publish presence status 'BUSY' to instant messaging presence server, and publish 'AT DESK' to SIP presence server |
| | Else | Publish presence status 'ON-LINE' to instant messaging presence server, and publish 'DO NOT DISTURB' to SIP presence server |

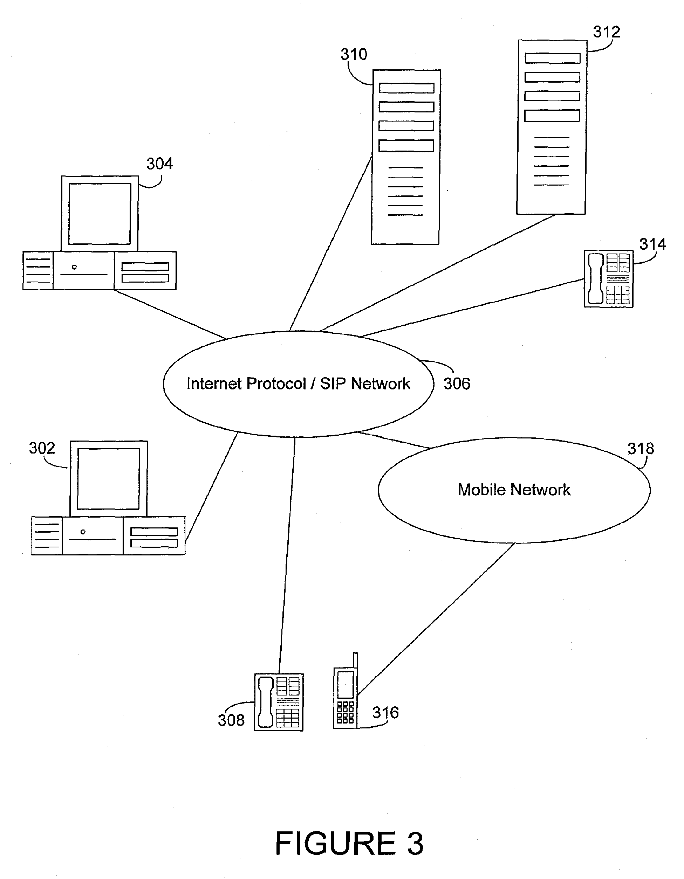

Referring now to Figure 3, there is shown a block diagram showing an overview of a system incorporating an embodiment of the present invention. A computer 302 is provided running an activity monitor as described above. The computer 302 is connected to an Internet protocol (IP) network 306 through which the computer 302 may receive instant messages sent from the computer 304. In order to send an instant message to the computer 302, the computer 304 first has to obtain the published presence status of the computer 302 from an instant messaging presence server 310. The presence status of the user of the computer 302 is determined in accordance with an embodiment of the monitor application described above. Depending on the published presence status of the user of the computer 302, the computer 304 may or may not be able to send an instant message to the computer 302. As described above, a monitor application may change the published presence status according to the monitored activity on the computer 302 and a predeterminable set of rules.

The activity monitor running on the computer 302 may also publish presence status information to a further presence server 312, which may be a SIP presence server. The published presence status may cause, for example, a telephone call placed from a telephone 314 to the users telephone 308 to be routed to the users mobile telephone 316 via a mobile telephone network 318.

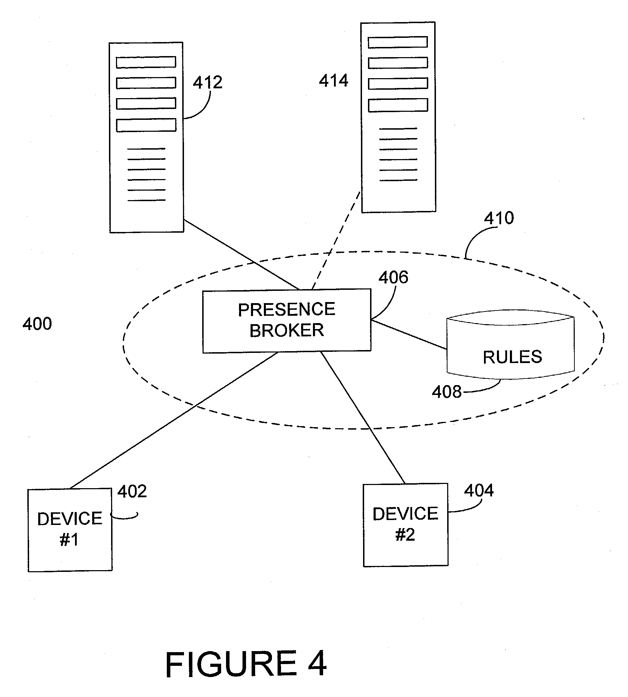

In a further embodiment, shown in Figure 4, a presence brokering service is provided to manage multiple presence status information received from multiple devices belonging to a single user. For example, if a user typically uses both a desktop computer 402 and a PDA 404, there may be times when the presence status determined by the computer 404 indicates that the user is 'away from desk' and therefore not contactable via instant messages. At the same time, if the user is using a PDA 404, the PDA may determine that the presence status is 'available' and may receive instant messages via the PDA

To avoid any potential conflicts, a presence brokering service 406 is provided, for example accessible via a network 410, to which all presence status information from devices relating to a single user may be sent. The presence broker uses a set of predeterminable rules 408 to determine which of the received presence statuses should be published to a presence server 412. As previously mentioned, the rules 408 may determine that different presence information be published to one or more difference presence servers, such as presence server 414.

Embodiments of the invention are particularly suitable for use in association with a device, such as a desktop computer, personal digital assistant (PDA), or mobile telephone and the like, through which information pertaining to the presence status of a user may be determined or assumed. It is preferred, although by no means essential, that the user interacts with the device on a regular basis, and that it is the use made by the device by the user which primarily determines the presence status of the user.

Embodiments of the invention are not limited to determining presence information solely for publishing to a presence server or database and it is envisaged that the device itself could regulate either its own functionality, or that of other devices based on the determined presence information. For example, the present invention may also be used to control a call forwarding or similar system, without detracting from the inventive concepts described herein. The system may also be used to provide presence information not in relation to a human user. For example, such a system may also be employed in a computer server to publish the status of a server based on a set of rules.

It will be appreciated that a monitor application in accordance with an embodiment of the present invention may be provided as an article of manufacture comprising a program storage medium having computer readable program code means embodied therein for performing the function of the monitor application as hereinbefore described.

## Claims

1. Apparatus, for use with a computing device, for selecting a presence status from a number of available presence statuses comprising:
a data store for storing at least one predeterminable rule;
an activity monitor for monitoring an activity through the device; and
logic for determining the presence status based in part on the at least one rule and in
part on the monitored activity.

2. Apparatus according to claim 1, wherein the activity monitored by the activity monitor is defined by the at least one rule.

3. Apparatus according to claim 1 or 2, wherein the activity monitor monitors activity of the device.

4. Apparatus according to claim 1, 2 or 3, wherein the activity monitor monitors activity external to the device.

5. Apparatus according to any previous claim, further comprising a presence publisher for publishing the determined presence status to a presence server.

6. Apparatus according to any previous claim, wherein the logic is adapted for determining a plurality of presence statuses.

7. Apparatus according to claim 6, wherein the presence publisher is adapted to publish each determined presence status to one of a plurality of presence servers.

8. Apparatus according to any previous claim, wherein the device is any one of a personal computer (PC), personal digital assistant (PDA), or a telephony-based communications device.

9. Apparatus according to any previous claim, wherein the determined presence information is published to an instant messaging presence server.

10. Apparatus according to any previous claim, wherein the determined presence information is published to a session initiation protocol (SIP) presence server.

11. A method, for use with a computing device, for selecting a presence status, from a number of available presence statuses comprising:
monitoring an activity through the device; and
determining a presence status based in part on the monitored activity and in part on at least one predeterminable rule.

12. A method according to claim 11, wherein the step of monitoring comprises monitoring an activity as defined by the at least one rule.

13. A method according to claim 11 or 12, wherein the step of monitoring comprises monitoring an activity on the device.

14. A method according to claim 11, 12 or 13, wherein the step of monitoring comprises monitoring an activity external to the device.

15. A method according to any of claims 11 to 14, further comprising publishing the determined presence status to a presence server.

16. A method according to any of claims 11 to 15, wherein the step of determining comprises determining a plurality of presence statuses.

17. A method according to claim 16, wherein the step of publishing further comprises publishing each determined presence status to one of a plurality of presence servers.

18. A method according to any of claims 11 to 17, for use with any one of a personal computer (PC), personal digital assistant (PDA), or a telephony-based communications device.

19. A method according to any of claims 11 to 18, wherein the step of publishing comprises publishing the presence status to an instant messaging presence server.

20. A method according to any of claims 11 to 19, wherein the determined presence information is published to a session initiation protocol (SIP) presence server.

21. A presence broking system for managing presence information received from two or more devices associated with a single user comprising:
a storage device for storing at least one predeterminable rule; and
means for publishing a presence status to a presence server based on the received presence information and the at least one predeterminable rules.
